# EUROPEAN PATENT APPLICATION

(11) **EP 3 369 832 A1**
(43) Date of publication of application: **05.09.2018**
(21) Application number: 16859331.7
(22) Date of filing: 29.03.2016
(51) Int. Cl.: C22C 38/00, C21D 9/46, C22C 38/38, C22C 38/60

(54) **Al-CONTAINING FERRITIC STAINLESS STEEL WITH EXCELLENT CREEP CHARACTERISTICS, MANUFACTURING METHOD THEREFOR, AND FUEL CELL MEMBER**

(30) Priority: 29.10.2015 JP 2015213300
(71) Applicant: Nippon Steel & Sumikin Stainless Steel Corporation, Chiyoda-ku Tokyo 100-0005 (JP)
(72) Inventor: KIMURA, Ken, Tokyo 100-8071 (JP); HATANO, Masaharu, Tokyo 100-0004 (JP); MATSUMOTO, Kazuhisa, Tokyo 100-0004 (JP)
(74) Representative: Vossius & Partner Patentanwälte Rechtsanwälte mbB
(86) International application number: PCT/JP2016/060185
(87) International publication number: WO 2017/073094

(57) **Abstract**

The present invention provides a ferritic stainless steel material having an excellent creep characteristic in a high temperature environment containing a reformed gas. The ferritic stainless steel material contains, by mass%, Cr: 11.0 to 25.0%, C: 0.001 % to 0.030%, Si: 0.01% to 2.00%, Mn: 0.01% to 2.00%, Al: 0.50% to 4.90%, P: 0.050% or less, S: 0.0100% or less, and N: 0.030% or less, contains one or both of Ti: 0.010% to 1.000% and Nb: 0.010% to 1.000%, contains one or both of B: 0.0005% to 0.0025% and Sn: 0.005% to 0.500%, has a balance of Fe and unavoidable impurities, and is comprised of a ferrite structure with a grain size number of 8.0 or less in 1/4 to 3/4 of sheet thickness.

## Description

### FIELD

The present invention relates to a ferritic stainless steel material suitable for a reformer of fuel cells to produce hydrogen by reforming hydrocarbon-based fuel such as city gas, methane, natural gas, propane, diesel oil and gasoline, a heat exchanger, or other high temperature member and a method for production thereof. In particular, it is suitable for high temperature members of solid oxide type fuel cells (SOFC) where creep strength and oxidation resistance reducing damage to the material in high temperature environments such as reformed gas environments are required.

### BACKGROUND

Recently, due to the depletion of fossil fuels such as oil, the phenomenon of global warming due to CO₂ emissions, and other problems, new systems for taking the place of conventional power generation systems have been spreading at a faster rate. As one of these, "fuel cells", which have high practical value as dispersed power sources and power sources for automobiles, are now the focus of attention. There are several types of fuel cells. Among these types of fuel cells, polymer electrolyte fuel cells (PEFC) and solid oxide type fuel cells (SOFC) are high in energy efficiency and expected to spread in use in the future.

Fuel cells are devices generating electrical power through a reaction process opposite to electrical breakdown of water and require hydrogen. Hydrogen is produced by reforming city gas (LNG), methane, natural gas, propane, diesel oil, gasoline, or other hydrocarbon-based fuels by a reaction in the presence of a catalyst. Among these as well, a fuel cell using city gas as the raw fuel has the advantage that hydrogen can be produced in areas equipped with city gas piping.

A fuel reformer is usually operated at a high temperature of 200 to 900°C in order to secure the heat quantity required for the hydrogen reforming reaction. Furthermore, under such high temperature operation, the reformer is exposed to an oxidizing atmosphere including a large amount of steam, carbon dioxide, carbon monoxide, etc. and is subject to a repeated heating and cooling cycle due to startup and stopping along with the hydrogen demand. Up until now, as a practical material having sufficient durability in that harsh environment, austenitic stainless steel such as SUS310S (25Cr-20Ni) has been used. Reduction of costs is necessary and essential to make fuel cell systems spread in the future. Reduction of the alloy cost by optimization of the materials used is an important issue.

Due to the above background, application of Al-containing ferritic stainless steel having the high oxidation resistance of alumina to a fuel reformer has been disclosed. PTL 1 discloses ferritic stainless steels for petroleum-based fuel reformer having a composition containing Cr: 8 to 35%, C: 0.03% or less, N: 0.03% or less, Mn: 1.5% or less, Si: 0.8 to 2.5%, and/or Al: 0.6 to 6.0%, further containing one or more of Nb: 0.05 to 0.80%, Ti: 0.03 to 0.50%, Mo: 0.1 to 4%, and Cu: 0.1 to 4%, and adjusted to a total amount of Si and Al of 1.5% or more. These stainless steels are characterized in that in a thermal fatigue test repeatedly heating and cooling a material in a 200 to 900°C temperature region (restriction ratio 50%), the number of cycles of heating and cooling until the tensile strength falls to three-quarters of the initial maximum tensile stress is 500 cycles or more. Further, the oxidation resistance is evaluated in an atmosphere comprising 50 vol%H₂O+20 vol%CO₂ and 50 vol%H₂O+10ppmSO₂ simulating the environment in which petroleum-based fuel reformers are exposed.

PTL 2 discloses ferritic stainless steels for alcohol-type fuel reformer use containing Cr: 8 to 25%, C: 0.03% or less, N: 0.03% or less, Si: 0.1 to 2.5%, Mn: 1.5% or less, and Al: 0.1 to 4% and, further containing one or more of Nb: 0.05 to 0.80%, Ti: 0.03 to 0.5%, Mo: 0.1 to 4%, and Cu: 0.1 to 4%. These stainless steels are characterized in that in a thermal fatigue test repeatedly heating and cooling a material in a 200 to 900°C temperature region (restriction ratio 100%), the number of cycles of heating and cooling until the tensile strength falls to three-quarters of the initial maximum tensile stress is 1000 cycles or more. Further, the oxidation resistance is evaluated in an atmosphere comprising 50 vol%H₂O+20 vol%CO₂ simulating the environment in which an alcohol-type fuel reformer is exposed.

PTL 3 discloses ferritic stainless steels for hydrocarbon-based fuel reformer use containing Cr: 12 to 20%, C: 0.03% or less, N: 0.03% or less, Si: 0.1 to 1.5%, Mn: 0.95 to 1.5%, and Al: 1.5% or less, containing one or more of Nb: 0.1 to 0.8, Mo: 0.1 to 4%, and Cu: 0.1 to 4.0, and adjusted in A value, defined by A=Cr+Mn+5(Si+Al), to 15 to 25 in range. These stainless steels are characterized in that in a thermal fatigue test repeatedly heating and cooling a material in a 200 to 900°C temperature region (restriction ratio 100%), the number of cycles of heating and cooling until the tensile strength falls to three-quarters of the initial maximum tensile stress is 800 cycles or more. Further, the oxidation resistance is evaluated in an atmosphere comprising 50 vol%H₂O+20 vol%CO₂ simulating the environment in which the hydrocarbon-based fuel reformer is exposed.

PTL 4 discloses an Al-containing ferritic stainless steels for fuel cell use characterized by containing C: less than 0.02%, Si: 0.15 to 0.7%, Mn: 0.3% or less, P: 0.035% or less, S: 0.003% or less, Cr: 13 to 20%, Al: 1.5 to 6%, N: 0.02% or less, Ti: 0.03 to 0.5%, and Nb: 0.001 to 0.1%, and, when the amount of solute Ti in the steel is [Ti] and the amount of solute Nb in the steel is [Nb], satisfying 0≤[Ti]≤[Nb]+0.05 and 0<[Nb]≤0.10 when 13≤Cr≤16 and 0≤[Ti]≤1/2×[Nb]+0.15, [Ti]≤0.12, and 0<[Nb]≤0.1 when 16<Cr≤20. These stainless steels are characterized in that the creep breakage time at 750°C and an initial stress of 10 MPa is 4000h or more. Further, the oxidation resistance is evaluated in an atmosphere comprising 20 vol%H₂O+20 vol%O₂ (balance nitrogen) at 1050°C.

PTL 5 discloses high purity ferritic stainless steel sheets excellent in oxidation resistance and high temperature strength containing C: 0.001 to 0.03%, Si: 0.01 to 2%, Mn: 0.01 to 1.5%, P: 0.005 to 0.05%, S: 0.0001 to 0.01%, Cr: 16 to 30%, N: 0.001 to 0.03%, Al: 0.8 to 3%, and Sn: 0.01 to 1%, having a 0.2% yield strength at 800°C of 40 MPa or more, and having a tensile strength of 60 MPa or more. The oxidation resistance of these stainless steels is evaluated at 1050°C in the atmosphere.

For application of ferritic stainless steel to high temperature members of fuel reformers and fuel cell systems, reduction of deformation at the time of high temperature use becomes necessary. From such a perspective, PTLs 1 to 3 evaluate the number of cycles until the material is broken in a thermal fatigue test, PTL 4 evaluates the number of cycles until the material is broken in a creep test, and PTL 5 evaluates the high temperature strength which is measured in the high temperature tensile test. In an actual usage environment, a material is used at a high temperature for a long time, so the creep characteristic is predicted as being optimal as the indicator for evaluation, but only PTL 4 studies the material from this viewpoint.

As means for improving the creep characteristics of ferritic heat resistant steel, numerous art has been disclosed up to now, but it is known that B is effective as an additive element.

For example, PTL 6 discloses ferritic heat resistant steel excellent in toughness of weld zone characterized by containing C: 0.01 to 0.05%, Si: 0.01 to 0.8%, Mn: 2% or less, P: 0.05% or less, S: 0.01% or less, Cr: 8 to 13%, Ni: 0.1 to 2.0%, W alone or W jointly added with Mo: 0.50 to 2.5%, V: 0.05 to 0.30%, Nb: 0.02 to 0.20%, B: 0.001 to 0.01%, Al: 0.005 to 0.20%, and N: 0.01 to 0.06%.

Further, PTL 7 discloses high chrome ferritic heat resistant steel excellent in high temperature creep strength characterized by limiting C: 0.01 to less than 0.08%, N: 0.01 to 0.10%, Si: 0.50% or less, Mn: 0.05 to 0.50%, Cr: 8.00 to 13.00%, W: over 1.50% to 3.50%%, Mo: 0.50% or less, V: 0.10 to 0.30%, Nb: 0.01 to 0.15%, and further Ni: 0.20% or less, Co: 0.20% or less, Cu: 0.20% or less, and B: 0.0010 to 0.0100%.

### CITATION LIST

### PATENT LITERATURE

PTL 1: Japanese Patent No. 3886785B
PTL 2: Japanese Patent No. 3910419B
PTL 3: Japanese Patent No. 3942876B
PTL 4: Japanese Patent No. 5544106B
PTL 5: Japanese Patent No. 5709570B
PTL 6: Japanese Patent No. 3475621B
PTL 7: Japanese Patent No. 3869908B

### SUMMARY

### TECHNICAL PROBLEM

In recent years, in SOFC systems, which are expected to spread in use in the future, fuel reformers, heat exchangers, and other parts are continuously operated at the 500 to 800°C temperature region. In durability and verification tests of SOFC systems, when ferritic stainless steel is applied to these parts, suppression of creep deformation at the time of high temperature operation, in particular the slight deformation near 700°C, is considered as a new objective from the viewpoint of improving the durability as a structure.

The steel materials disclosed in PTLs 1 to 5 improve the lifetimes of the materials against damage and breakage. The efficacy against such creep deformation is unknown. Furthermore, the actions and effects of the trace elements effective against such creep strength are not alluded to at all. On the other hand, the arts disclosed in PTL 6 and PTL 7 cover metal structures comprised of tempered martensite structures. In such metal structures, B probably contributes to stabilization of the carbides and intergranular strengthening and improves the creep characteristic. In this regard, however, PTLs 1 to 5 do not disclose or suggest technologies which suggest improving the creep characteristic of an Al-containing ferritic stainless steel comprising a ferrite single phase structure enough to enable the Al-containing ferritic stainless steel to be applied to an SOFC system.

Further, in Al-containing ferritic stainless steel, the effect of Sn on the creep characteristic has not been clarified up to now.

As explained above, no ferritic stainless steel solving the new problem of the creep characteristic in durability in a high temperature environment including reformed gas has yet appeared.

### SOLUTION TO PROBLEM

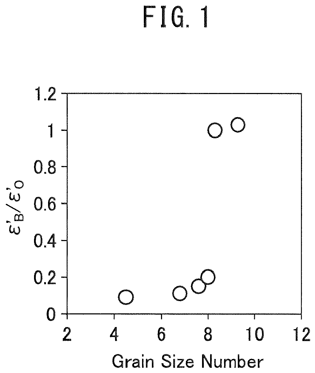

The inventors engaged in repeated experiments and studies on the relationship between the chemical composition of Al-containing ferritic stainless steel and the creep characteristic so as to solve the above problem and thereby completed the present invention. The findings obtained in the present invention are explained below.
(a) Unlike ferritic heat resistant steel having a tempered martensite structure, in high Al-containing ferritic stainless steel which has at least one of a recrystallized structure and recovered structure and does not contain any martensite structure, depending on the final metal structure, sometimes the effect of B on improvement of the creep characteristic is obtained and sometimes it is not.
(b) The metal structure wherein the effect of B on improvement of the creep characteristic is obtainedt is relatively large in grain size. That is, the inventors found that there is an optimal metal structure (grain size) wherein B can act to improve the creep characteristic among the metal structures of high Al-containing ferritic stainless steel. FIG. 1 shows the relationship between the minimum creep rate ratio ε'B/ε'0 (ratio of minimum creep rate ε'B(%/h) of B-containing steel to minimum creep rate ε'0 of B-free steel) and the grain size number when the B-containing steel was 18%Cr-2%Al-0.1%Ti steel to which B: 0.0010% was added. The creep test was conducted at 700°C and 25 MPa, while the grain size number was measured on the basis of JIS G 0552. As shown in the drawing, when larger than the grain size number 8.0, the minimum creep rate ratio is about 1, but when the grain size number is 8.0 or less, the minimum creep rate ratio greatly falls.
(c) The grain size after final annealing greatly changes according to the production conditions. In particular, the slower the final cold rolling rate and temperature elevation rate in subsequent heat treatment, the greater the grain size tends to be.
(d) Even if adding Sn alone instead of B, the effect of improvement of the creep characteristic can be obtained. Furthermore, if adding Sn and B together, a more remarkable effect of improvement can be obtained than the case of adding each of the elements alone. The detailed reason is unclear. However, since both Sn and B are elements which segregate in steel, Sn might have the same function and effect as B has.

The present invention was made based on the above discoveries and has as its gist the following constitutions:
(1)A ferritic stainless steel material excellent in creep characteristic comprising, by mass%, Cr: 11.0 to 25.0%, C: 0.001% to 0.030%, Si: 0.01% to 2.00%, Mn: 0.01% to 2.00%, Al: 0.50% to 4.90%, P: 0.050% or less, S: 0.0100% or less, and N: 0.030% or less, containing one or both of Ti: 0.010% to 1.000% and Nb: 0.010% to 1.000%, containing one or both of B: 0.0005% to 0.0025% and Sn: 0.005% to 0.500%, and having a balance of Fe and unavoidable impurities, where a metal structure in a region from a center of sheet thickness to 1/4 of the thickness in both surface directions is a ferrite structure and a grain size no. of the ferrite is 8.0 or less.
(2) The ferritic stainless steel material excellent in creep characteristic according to (1) further comprising, by mass%, one or more of Ni: 1.00% or less, Cu: 1.00% or less, Mo: 2.00% or less, W: 1.00% or less, Sb: 0.50% or less, Co: 0.50% or less, V: 0.50% or less, Ca: 0.0050% or less, Mg: 0.0050% or less, Zr: 0.50% or less, La: 0.100% or less, Y: 0.100% or less, Hf: 0.10% or less, and REM: 0.100% or less.
(3) A method for producing a ferritic stainless steel material excellent in creep characteristic comprising producing a ferritic stainless steel material having a composition of (1) or (2), the method comprising a step of hot rolling and a combination of cold rolling and heat treatment thereafter, wherein a rolling reduction at a step of final cold rolling is less than 85%, a temperature elevation rate at 400°C to 700°C in an elevated temperature process in a step of heat treatment after the final cold rolling is 15°C/s or less and a peak temperature is 900°C or more.
(4) A fuel cell member, wherein the fuel cell member is formed of a ferritic stainless steel material according to (1) or (2).

### ADVANTAGEOUS EFFECTS OF INVENTION

According to the present invention, it is possible to provide an Al-containing ferritic stainless steel material suppressing creep deformation, in particular, the slight deformation near 700°C that is important from the viewpoint of improvement of the durability of a structure even in the case of continuous use in a similar way with an SOFC system in an environment containing reformed gas at a high temperature of 500 to 800°C..

### BRIEF DESCRIPTION OF DRAWINGS

FIG. 1 is a graph showing the relationship between the minimum creep rate ratio ε'B/ε'0 and grain size number in the case of adding B: 0010% to 18%Cr-2%Al-0.1%Ti steel.

### DESCRIPTION OF EMBODIMENTS

Below, the features of the present invention is explained in detail. Note that the notations "%" of the contents of the elements mean "mass%".
(I) The reasons for limitation of the components are explained below:
   Cr is an element improving the corrosion resistance, creep characteristic, and oxidation resistance. In the present invention, if less than 11.0%, the targeted creep characteristic and oxidation resistance are not sufficiently secured. Therefore, the lower limit is made 11.0%. However, excessive addition of Cr assists the formation of the brittle σ phase when the stainless steel material is exposed to a high temperature atmosphere. Further, the excessive addition invites a rise in the alloy cost. Therefore the upper limit is made 25.0%. From the viewpoint of the basic characteristics and oxidation resistance and productivity, the preferable range is 13.0 to 22.0%. The more preferable range is 16.0 to 20.0%.

C is preferably as small as possible since it causes degradation of the corrosion resistance. The upper limit is made 0.030%. However, excessive reduction leads to a rise in the refining cost, so the lower limit is made 0.001%. From the viewpoints of the creep characteristic, oxidation resistance, and productivity, the preferable range is 0.002 to 0.020%.

Si is an important element in securing the oxidation resistance targeted by the present invention. To obtain these effects, the lower limit is made 0.01%. On the other hand, excessive addition sometimes causes a drop in the toughness and workability of the steel and inhibits the formation of the Al-based oxide film targeted by the present invention, so the upper limit is made 2.00%. From the viewpoints of the oxidation resistance, productivity, and formability, 1.00% or less is preferable. If positively utilizing the effect of Si, the content is preferably made 0.30 to 1.00% in range.

Mn forms a solid solution in the oxide film together with Si in a reformed gas environment to raise the protective ability. To obtain these effects, the lower limit is made 0.01%. On the other hand, excessive addition obstructs the corrosion resistance of the steel and the formation of Ti- and Al-based oxide films targeted by the present invention, so the upper limit is made 2.00% or less. From the viewpoint of the oxidation resistance and basic properties, 1.00% or less is preferable. If positively utilizing the effect of Mn, the content is preferably made 0.20 to 1.00% in range. Mn also need not be contained.

Al is an essential additive element which serves not only as a deoxidizing element but also as an element forming the targeted Al-based oxide film of the present invention to suppress evaporation of Cr. In the present invention, if less than 0.50%, the targeted effect of suppression of the evaporation of Cr cannot be obtained. Therefore, the lower limit is made 0.50%. However, excessive addition of Al invites a drop in the toughness and weldability of the steel and obstructs productivity, so there are also problems in the rise of alloy cost and economicalness. The upper limit is made 4.90% from the viewpoints of the basic properties and economicalness. From the viewpoints of suppression of evaporation of Cr and the basic properties of the present invention and economicalness, the suitable range is 1.00 to 4.00%, more preferably 1.25 to 3.50%. From the viewpoint of manufacture, the most preferable range is 1.50 to 2.50%.

P is an element obstructing productivity and weldability. The smaller the content, the better, so the upper limit is made 0.050%. However, excessive reduction leads to a rise in the refining costs, so the lower limit is preferably made 0.003%. From the viewpoints of the productivity and weldability, the preferable range is 0.005 to 0.040%, more preferably 0.010 to 0.030%.

S is an unavoidable impurity contained in steel and lowers the protective ability of the Al-based film targeted by the present invention. In particular, the presence of the Mn-based inclusions and the solid solution of S act as starting points which cause the Al-based oxide film to crack with long-term use in a high temperature environment. Therefore, the lower the amount of S, the better, so the upper limit is made 0.0100%. However, excessive reduction leads to a rise in the raw material and refining costs, so the lower limit is made 0.0001%. From the viewpoints of the productivity and oxidation resistance, the preferable range is 0.0001 to 0.0020%, more preferably 0.0002 to 0.0010%.

In common with C, N obstructs the oxidation resistance targeted by the present invention. For this reason, the smaller the amount of N, the better. The upper limit is made 0.030%. However, excessive reduction leads to a rise in the refining costs, so the lower limit is preferably made 0.002%. From the viewpoints of the oxidation resistance and productivity, the preferable range is 0.005 to 0.020%.

B is an important element in the present invention. In high Al-containing stainless steel, it has the effect of improving the creep characteristic in combination with the grain size. The effect of B on improvement of the creep characteristic is obtained by the addition of 0.0005% or more, so this amount is made the lower limit. On the other hand, excessive addition invites deterioration of the productivity. Further, the effect of improvement of the creep characteristic is saturated, so 0.0025% is made the upper limit. The preferable range is 0.0005 to 0.0012%.

Further, even if adding Sn alone instead of B, the effect of improvement of the creep characteristic can be obtained. The effect of addition is exhibited at 0.005% or more, so this amount is made the lower limit. On the other hand, a large amount of addition invites deterioration of the productivity, so 0.500% is made the upper limit. If considering the productivity, the preferable range is 0.010 to 0.300%, while the more preferable range is 0.020 to 0.120%. Further, combined addition of Sn and B is preferable since the creep characteristic is improved more than when adding each of these elements alone.

One or both of Ti and Nb are added as follows:
Ti improves the creep characteristic and oxidation resistance through raising the purity of the steel by the action as a stabilizing element fixing the C and N. To obtain these effects, the lower limit of Ti is preferably 0.010%. On the other hand, excessive addition leads to a drop in the productivity and a drop in the oxidation resistance accompanying a rise in the alloy cost and a rise in the recrystallization temperature, so the upper limit is made 1.000%. From the viewpoint of the alloy cost and productivity and the oxidation resistance, the preferable range is 0.050 to 0.500%. Furthermore, the preferable range for positive use of the effect of Ti is 0.100 to 0.400%.

Nb improves the creep characteristic and oxidation resistance through purifying the steel by the action of a stabilizing element fixing the C and N. To obtain these effects, the lower limit of Nb is preferably made 0.010%. On the other hand, excessive addition leads to a drop in the productivity and a drop in the oxidation resistance accompanying a rise in the alloy cost and a rise in the recrystallization temperature, so the upper limit is made 1.000%. From the viewpoint of the alloy cost and productivity and the oxidation resistance, the preferable range is 0.050 to 0.500%. Furthermore, the preferable range for positive use of the effect of Nb is 0.200 to 0.600%.

In addition to the above basic composition, the following elements may be selectively added.

Ni, Cu, Mo, W, Sb, Co, and V are elements effective for raising the high temperature strength and corrosion resistance of this member and are added according to need. However, excessive addition leads to a rise of alloy cost and obstruction of productivity, so the upper limits of Ni and W are made 1.00% and the upper limit of Cu is made 1.000%. Mo is an element effective for suppressing high temperature deformation due to the drop in coefficient of thermal expansion, so the upper limit is made 2.000%. The upper limits of Co and V are made 0.50% and the upper limit of Sb is made 0.500%. In each element, the more preferable lower limit of the content is made 0.10%.

Ca and Mg are elements for improving hot workability and secondary workability and are added in accordance with need. However, excessive addition leads to obstruction of the productivity, so the upper limit is made 0.0050%. The preferable lower limit is made 0.0001%.

Zr, La, Y, Hf, and REM are elements effective for improvement of the hot workability and cleanliness of the steel and for improvement of the oxidation resistance and may be added in accordance with need. However, in view of the technical idea of the present invention and reduction of the alloy cost, the present invention does not depend on the effects of addition of the elements. If added, the upper limit of Zr is made 0.50%, while the upper limits of La, Y, Hf, and REM are made 0.100%. The more preferable lower limit of Zr is made 0.01%, while the preferable lower limits of La, Y, Hf, and REM are made 0.001%. Here, an REM is an element of the atomic numbers 57 to 71, for example, is Ce, Pr, Nd, etc.

In addition to the elements explained above, other elements may be included in a range not impairing the effects of the present invention. Reduction of the general impurity elements of the above-mentioned P and S and also Bi, Pb, Se, H, Ta, etc. as much as possible is preferable. On the other hand, the contents of these elements should be controlled to a range where the problem of the present invention is to be solved. In accordance with need, one or more of Bi≤100 ppm, Pb≤100 ppm, Se≤100 ppm, H≤100 ppm, and Ta≤500 ppm may be contained.

Next, the metal structure of the ferritic stainless steel material of the present invention is explained. In the ferritic stainless steel material of the present invention, the metal structure in the region of thickness of 1/4 of the sheet thickness from the center of sheet thickness to both surface directions of the steel material is a ferrite structure or substantially ferrite single phase. The grain size number of the ferrite structure is 8.0 or less. Further, the metal structure of the "substantially ferrite single phase" means a structure where in observation under an optical microscope, for example, austenite phase and martensite phase structures cannot be recognized and comprised of a ferrite phase and precipitates.

When the grain size number of the ferrite is over 8.0, the effect of addition of B on improvement of the creep characteristic is not obtained, so this grain size number is made the lower limit. The larger the grain size, the better the creep characteristic, so the grain size number is preferably 7.0 or less. In addition, the range of measurement of the grain size is made the thick part between the depth of 1/4 of the sheet thickness from one surface of the steel material toward the center direction of sheet thickness and the depth of 1/4 of the sheet thickness from the other surface of the steel material toward the center direction of sheet thickness. According to studies by the inventors, the creep characteristic is determined by the part near the center of sheet thickness, so the grain size of this part becomes important. In general, the larger the grain size, the better the creep characteristic. Therefore, it is considered that the structure near the center of sheet thickness where the grain size becomes larger determines the creep characteristic. The method of measurement of the grain size is based on JIS G 0552. Further, when elongated grains grow in the vicinity of the center of sheet thickness in the step of the heat treatment after the final cold rolling, a method basedon the above-mentioned method may be used to measure the grain size number of the grains.
(II) The method for production is explained below.

First, the method for production for obtaining the above metal structure will be explained.

The ferritic stainless steel material of the present invention is produced by the steps of hot rolling, then a combination of cold rolling and heat treatment. The number of steps of cold rolling and heat treatment is not particularly limited, but the upper limit of the final cold rolling rate is made 85%. When the cold rolling rate is made higher than the above-mentioned upper limit, fine recrystallized grains are formed after the final heat treatment and the predetermined creep characteristic cannot be satisfied. Preferably it is 80% or less. The lower limit does not particularly have to be set. However, in order to form the shape of the steel material, a 30% or more cold rolling rate is preferable.

Further, in the present invention, control of the temperature elevation conditions in the final annealing process is important. In the temperature elevation process of heat treatment after the final cold rolling, the temperature elevation rate at 400°C to 700°C is made 15°C/s or less. When the temperature elevation rate at 400°C to 700°C is more than 15°C/s, the grain size after heat treatment becomes fine and the effect of the addition of B in improving the creep characteristic is not exhibited. The preferable temperature elevation rate is 12°C/s or less. The peak temperature is made 900°C or more. Further, when the target peak temperature is 900°C or more, the temperature elevation rate from 700°C to the target peak temperature is not particularly limited. When the target peak temperature is less than 900°C, nonrecrystallized grains remain, hardening occurs, and sufficient formability cannot be obtained. Further, it is not necessary to specify the upper limit of the peak temperature. However, if the target peak temperature is too high, the surface roughness of the steel material is liable to be increased significantly at the time of forming the shape of the steel material. Therefore, the peak temperature is preferably made 1050°C or less.

The reason why the steel excellent in creep characteristic is obtained by the present invention is considered to be as follows: First, the reason why the effect of B in improving the creep characteristic varies depending on the metal structure (grain size) will be explained:: B is an element segregating at the crystal grain boundaries. Therefore, it is considered that B segregates at the crystal grain boundaries in the final annealing process. When the crystal grain boundaries are fine, the crystal grain boundary area becomes larger, therefore the amount of segregation of B per unit grain boundary area tends to decrease. There is an optimum range of B amount in which B acts as a grain boundary strengthening element. If the amount of B is less than the optimum one, it is considered that the effect of improvement of the creep characteristic cannot be exhibited. That is, it is considered that in order for the creep characteristic caused by B to be exhibited, it is important to control the B amount of the steel and the grain boundary area of the steel structure to suitable values.

Further, if the temperature elevation rate from 400°C to 700°C in the final annealing process is too fast, a large number of recrystallization nuclei are formed at the time of temperature elevation and the grain size becomes more refined. Therefore, the creep characteristic deteriorates. It is considered that the temperature range in which the temperature elevation rate (400°C to 700°C) should be specified is the temperature region in which the strain introduced by cold rolling is caused to be recovered. By suppressing recrystallization while reducing dislocations in this temperature region, then causing recrystallization or recovery, it is considered the above-mentioned metal structure is formed.

In common with B, Sn is an element which easily segregates at the grain boundaries. Therefore, it is considered that addition of Sn results in an improvement of the creep characteristic by a mechanism similar to the above effect of B.

In this way, B is known as an element which improves the creep characteristic of tempered martensite steel. However, it was clarified that this effect caused by B varies depending on the metal structure in the case of Al-containing ferritic stainless steel. This is a new finding which the inventors obtained. By controlling the grain size, the effect of B is exhibited to the maximum extent. This is an important point of the present invention. Further, it was discovered that by the addition of Sn as well, an effect of improvement of the creep characteristic is obtained. This is also an important point of the present invention.

Further, in the creep characteristic, preferably the minimum creep rate when a constant load test based on JIS Z 2271 is conducted under test conditions of 700°C and an initial stress of 25 MPa becomes 1.0×10⁻²(%/h) or less. The above-mentioned preferable creep characteristic is specified by considering continuous operation of the fuel reformer, heat exchanger, or other part comprising the steel material according to the present invention at a 500 to 800°C temperature region.

### EXAMPLES

Below, examples of the present invention will be explained.

Various types of ferritic stainless steels comprised of the components shown in Table 1 were smelted, then hot rolled, annealed, pickled, and cold rolled to produce the cold rolled steel sheets No. 1 to No. 24 of sheet thicknesses 0.8 to 2.0 mm under the conditions shown in Table 2. Furthermore, in Table 2, the item "Final cold rolling rate" will be explained. A stainless steel cold rolled material is cold rolled one or more times. Depending on improvements in material quality and properties (hardness), sometimes the cold rolling is performed a plurality of times. This is referred to by the number of stages of cold rolling such as "2-stage cold rolling" and "3-stage cold rolling". The "final cold rolling" is the cold rolling at the last cold rolling process performed for forming the final product shape. In the case of two-stage cold rolling, this designates the second stage cold rolling, while in the case of three-stage cold rolling, this designates the third stage cold rolling. Note that, in single stage cold rolling, several passes is the general practice. The total rolling rate of the plurality of passes in the final cold rolling is defined as the "final cold rolling rate". The items "temperature elevation rate" and "peak temperature" indicate the temperature elevation rate and peak temperature in the final annealing process performed after the final cold rolling of the corresponding cold rolled steel sheet. Further, the obtained steel sheet was examined under an optical microscope and measured for grain size number by a method based on JIS G 0552 at 1/4 to 3/4 thickness of the sheet. The results of measurement are indicated as the item "Grain size no. D" of Table 2.

**Table 1**

| Steel type | Component (mass%) | | | | | | | | | | | | |
|---|---|---|---|---|---|---|---|---|---|---|---|---|---|
| | C | Si | Mn | P | S | Cr | Ti | Nb | Al | N | B | Sn | Others |
| A | 0.009 | 0.21 | 0.72 | 0.035 | 0.0015 | 11.8 | 0.390 | | 0.61 | 0.018 | 0.0018 | | Co: 0.34, REM: 0.005, Mo: 1.480 |
| B | 0.008 | 0.85 | 0.25 | 0.019 | 0.0003 | 17.2 | 0.090 | | 1.90 | 0.011 | 0.0008 | 0.012 | |
| C | 0.03 | 0.25 | 0.30 | 0.025 | 0.0008 | 22.9 | | 0.550 | 3.45 | 0.008 | 0.0015 | | Cu: 0.110, Mo: 1.110, Co: 0.21, La: 0.009, Y: 0.010, Hf: 0.030 |
| D | 0.012 | 0.06 | 0.06 | 0.040 | 0.0077 | 15.1 | 0.140 | | 4.50 | 0.011 | 0.0005 | | |
| E | 0.004 | 1.76 | 0.54 | 0.011 | 0.0022 | 17.7 | 0.120 | 0.190 | 1.10 | 0.002 | | 0.290 | Ca: 0.0011, Sb: 0.11 |
| F | 0.005 | 1.22 | 1.80 | 0.027 | 0.0019 | 13.4 | 0.011 | 0.390 | 0.72 | 0.012 | 0.0024 | | Ni:0.1 2, W: 0.22, REM: 0.003, Zr: 0.02, V: 0.06 |
| G | 0.015 | 0.55 | 0.35 | 0.025 | 0.0002 | 19.2 | 0.150 | 0.250 | 1.60 | 0.015 | 0.0006 | | Ni: 0.35, Cu: 0.450, Sb: 0.020, Mg: 0.0002, Ca: 0.0003 |
| H | 0.006 | 0.41 | 0.27 | 0.026 | 0.0004 | 18.0 | 0.190 | | 2.00 | 0.009 | 0.0011 | 0.036 | V: 0.06, Ni: 0.08, Cu: 0.032, Mo: 0.041 |
| I | 0.015 | 0.32 | 0.56 | 0.020 | 0.0007 | 16.3 | 0.150 | | 1.50 | 0.016 | | 0.091 | Mg: 0.001 1, Ca: 0.0007 |
| J | 0.008 | 0.65 | 0.24 | 0.018 | 0.0003 | 17.3 | 0.090 | | 0.35 | 0.012 | 0.0009 | | |
| K | 0.011 | 0.36 | 0.20 | 0.020 | 0.0070 | 16.2 | 0.110 | | 1.60 | 0.015 | 0.0003 | | |
| L | 0.006 | 0.24 | 0.87 | 0.035 | 0.0015 | 18.2 | 0.210 | | 1.82 | 0.009 | <0.0001 | 0.0005 | Sb: 0.025, Mo: 0.340 |

Underlines indicate outside the scope of the chemical composition of the ferritic stainless steel material according to the present invention. Empty fields show not measured since corresponding component not added.

**Table 2**

| No. | Steel type | Final cold rolling rate (%) | Temperature elevation conditions at final annealing process | | Results of measurement in constant load test (JIS Z 2271) | | Remarks |
|---|---|---|---|---|---|---|---|
| | | | Temperature elevation rate (°C/s) | Peak temperature (°C) | Grain size no. D | Minimum creep rate (%/h) | |
| 1 | A | 50 | 10 | 950 | 7.8 | 3.20E-03 | Inv. ex. |
| 2 | A | 90 | 9 | 1000 | 8.4 | 2.90E+00 | Comp. ex. |
| 3 | B | 65 | 15 | 910 | 6.7 | 9.80E-04 | Inv. ex. |
| 4 | B | 70 | 30 | 950 | 8.3 | 2.30E-02 | Comp. ex. |
| 5 | C | 84 | 14 | 980 | 7.2 | 3.50E-03 | Inv. ex. |
| 6 | C | 84 | 12 | 750 | Not recrystallized | 3.90E-02 | Comp. ex. |
| 7 | D | 35 | 8 | 980 | 5.9 | 2.50E-03 | Inv. ex. |
| 8 | D | 45 | 12 | 750 | Not recrystallized | 8.60E-02 | Comp. ex. |
| 9 | E | 75 | 12 | 1000 | 7.2 | 1.90E-03 | Inv. ex. |
| 10 | E | 75 | 18 | 950 | 8.2 | 4.50E-02 | Comp. ex. |
| 11 | F | 59 | 8 | 1040 | 7.5 | 4.20E-03 | Inv. ex. |
| 12 | F | 87 | 11 | 1000 | 8.4 | 3.50E-02 | Comp. ex. |
| 13 | G | 75 | 12 | 990 | 6.8 | 1.90E-03 | Inv. ex. |
| 14 | G | 65 | 10 | 820 | Not recrystallized | 7.20E-02 | Comp. ex. |
| 15 | H | 75 | 14 | 1020 | 7.3 | 9.50E-04 | Inv. ex. |
| 16 | H | 65 | 30 | 1000 | 8.7 | 3.40E-02 | Comp. ex. |
| 17 | I | 80 | 4 | 970 | 6.9 | 5.30E-03 | Inv. ex. |
| 18 | I | 87 | 11 | 1000 | 9.1 | 1.10E-01 | Comp. ex. |
| 19 | J | 75 | 10 | 1020 | 7.4 | 7.90E-02 | Comp. ex. |
| 20 | J | 60 | 50 | 980 | 8.3 | 2.10E-01 | Comp. ex. |
| 21 | K | 90 | 12 | 1000 | 8.7 | 3.20E-01 | Comp. ex. |
| 22 | K | 65 | 7 | 1000 | 7.6 | 9.20E-02 | Comp. ex. |
| 23 | L | 87 | 7 | 970 | 8.6 | 4.50E-01 | Comp. ex. |
| 24 | L | 59 | 14 | 970 | 7.2 | 1.30E-01 | Comp. ex. |

The creep test is made a constant load test based on JIS Z 2271 and uses a plate-shaped test piece with a parallel part of 10 mm width and a 35 mm length. The test conditions are made 700°C and an initial stress of 25 MPa. To evaluate the creep strength involved in the slight high temperature deformation of the problem of the present invention, the minimum creep rate was evaluated. If the minimum creep rate becomes 1.0×10⁻²(%/h) or less, the creep characteristic is evaluated as good.

The obtained results are shown together in Table 2. The invention examples satisfying the components and metal structures prescribed in the present invention satisfy the high creep characteristic required. Further, in the steel sheets of No. 3 and No. 15 when jointly adding B and Sn, the results become 1.0×10⁻³(%/h) or less. Higher creep characteristics are exhibited than steel sheets where either B or Sn is added alone.

### INDUSTRIAL APPLICABILITY

According to the present invention, it is possible to provide Al-containing ferritic stainless steel material excellent in creep characteristic. Therefore, it is possible to provide a material suitable for high temperature members used in fuel cells, gas turbines, power generation systems, etc., automobile members such as exhaust manifolds, converters, mufflers, turbochargers, EGR coolers, front pipes, and center pipes, combustion devices such as stoves and fan heaters, pressure vessels such as pressure cookers, and other members used under a high temperature environment.

## Claims

1. A ferritic stainless steel material excellent in creep characteristic comprising, by mass%, Cr: 11.0 to 25.0%, C: 0.001% to 0.030%, Si: 0.01% to 2.00%, Mn: 0.01% to 2.00%, Al: 0.50% to 4.90%, P: 0.050% or less, S: 0.0100% or less, and N: 0.030% or less, containing one or both of Ti: 0.010% to 1.000% and Nb: 0.010% to 1.000%, containing one or both of B: 0.0005% to 0.0025% and Sn: 0.005% to 0.500%, and having a balance of Fe and unavoidable impurities, where a metal structure in a region from a center of sheet thickness to 1/4 of the thickness in both surface directions is a ferrite structure and a grain size no. of the ferrite is 8.0 or less.

2. The ferritic stainless steel material excellent in creep characteristic according to claim 1 further comprising, by mass%, one or more of Ni: 1.00% or less, Cu: 1.00% or less, Mo: 2.00% or less, W: 1.00% or less, Sb: 0.50% or less, Co: 0.50% or less, V: 0.50% or less, Ca: 0.0050% or less, Mg: 0.0050% or less, Zr: 0.50% or less, La: 0.100% or less, Y: 0.100% or less, Hf: 0.10% or less, and REM: 0.100% or less.

3. A method for producing a ferritic stainless steel material excellent in creep characteristic comprising producing a ferritic stainless steel material having a composition of claim 1 or 2, the method comprising a step of hot rolling and a combination of cold rolling and heat treatment thereafter, wherein a rolling reduction at a step of final cold rolling is less than 85%, a temperature elevation rate at 400°C to 700°C in an elevated temperature process in a step of heat treatment after the final cold rolling is 15°C/s or less, and a peak temperature is 900°C or more.

4. A fuel cell member, wherein the fuel cell member is formed of a ferritic stainless steel material according to claim 1 or 2.
